Europäisches Patentamt

(19) European Patent Office

Office européen des brevets

(11) Numéro de publication: **0 084 479**
**B1**

(12) **FASCICULE DE BREVET EUROPEEN**

(45) Date de publication du fascicule du brevet:
**19.03.86**

(21) Numéro de dépôt: **83400050.7**

(22) Date de dépôt: **10.01.83**

(51) Int. Cl.⁴: **B 66 C 1/02**, B 65 G 47/91

(54) Procédé et dispositif de préhension par aspiration.

(30) Priorité: **11.01.82 FR 8200290**

(43) Date de publication de la demande:
**27.07.83 Bulletin 83/30**

(45) Mention de la délivrance du brevet:
**19.03.86 Bulletin 86/12**

(84) Etats contractants désignés:
**BE DE GB IT LU NL**

(56) Documents cités:
**DE - A - 1 926 479**
**DE - A - 1 930 366**
**DE - B - 1 075 814**
**FR - A - 2 166 242**
**FR - A - 2 184 072**
**FR - A - 2 316 177**
**GB - A - 1 137 031**
**GB - A - 1 483 952**
**US - A - 1 579 744**
**US - A - 2 390 242**
**US - A - 3 404 787**

(73) Titulaire: **CARNAUD EMBALLAGE, 65 Avenue Edouard Vaillant, F-92100 Boulogne sur Seine (FR)**

(72) Inventeur: **Rannou, Jean-Pierre, 49, rue de Sèvres, F-92100 Boulogne sur Seine (FR)**
Inventeur: **Moszkowski, Jean-Paul, 55 Rue de Sèvres, F-92100 Boulogne sur Seine (FR)**
Inventeur: **Assadet, Gérard, 33bis, rue Doudeauville, F-75018 Paris (FR)**

(74) Mandataire: **CABINET BONNET-THIRION, 95 Boulevard Beaumarchais, F-75003 Paris (FR)**

# Description

La présente invention concerne d'une manière générale la saisie d'une charge pouvant comporter une pluralité d'objets disposés en lit.

Elle vise plus particulièrement, mais non exclusivement, le cas où plusieurs lits de tels objets sont superposés, avec eventuellement interposition d'intercalaires entre lits successifs.

C'est le cas, notamment, d'objets gerbés en lits successifs sur une palette de manutention.

Pour dépalettiser lit par lit de tels objets, il est connu d'utiliser des dispositifs de préhension qui, pour la saisie simultanée des objets d'un même lit, mettent en oeuvre une source d'aspiration.

En pratique, un tel dispositif de préhension est constitué d'une hotte d'aspiration qui, fermée par un fond perforé à niveau avec sa tranche inférieure, est appliquée, par ce fond, contre l'ensemble des objets à saisir d'un même lit.

Un tel dispositif de préhension peut notamment convenir lorsque les objets à saisir sont des objets creux, flacons par exemple, présentés ouverture en haut; en effet, pour autant qu'une perforation au moins du fond de la hotte se trouve en regard de l'ouverture d'un tel objet, il se produit, au sein de celui-ci, lorsque la hotte d'aspiration lui est appliquée, une dépression qui, le plaquant contre le fond de ladite hotte, le solidarise temporairement à celuici et permet donc son entraînement conjointement avec celui de cette hotte, élevée à cet effet, le fond de ladite hotte formant alors simplement une barrière assurant localement la retenue mécanique d'un tel objet à l'encontre de la source d'aspiration à laquelle la hotte est reliée.

Il peut également convenir si les objets à saisir présentent au moins localement, pour l'application du fond perforé de la hotte d'aspiration,une quelconque surface délimitée par un contour situé dans un plan et propre ainsi à s'appliquer de manière étanche à un tel fond autour d'une au moins des perforations de celui-ci.

Mais, un tel dispositif de préhension, qui, en pratique, pour la saisie simultanée d'une pluralité d'objets, traite individuellement chacun de ceux-ci, peut se trouver en défaut lorsque de tels objets sont de configuration quelconque, et/ou, s'agissant d'objets creux, lorsque l'orientation suivant laquelle ces objets présentent à la hotte d'aspiration leur ouverture est quelconque, cette ouverture pouvant dans ce cas échapper aux perforations du fond d'une telle hotte d'aspiration.

En outre, il n'est pas susceptible, lors de la dépalettisation d'objets gerbés en lits successifs, d'assurer, conjointement avec les objets d'un même lit, l'enlèvement de l' intercalaire éventuellement interposé entre un tel lit et le suivant, en sorte que, dans ce cas, une opération particulière, immanquablement dispendieuse, doit être en supplément mise en oeuvre pour assurer un tel enlèvement.

On connaît aussi, de par le document FR-A- 2 166 242 par exemple, des dispositifs de préhension pour charge multiple, de préférence compacte en vue d'éviter les fuites, qui comportent, outre une source d'aspiration pour exercer un effet de ventouse sur la charge, des organes de serrage latéral articulés avantageusement manoeuvrés par une dépression provoquée par la source d'aspiration. Il en résulte une structure assez complexe.

La présente invention a d'une manière générale pour objet une disposition permettant de pallier ces inconvénients.

De manière plus précise, elle a tout d'abord pour objet un procédé de préhension du genre mettant en oeuvre une source d'aspiration pour la saisie d'une charge pouvant comporter une pluralité d'objetsdisposés en lit, selon lequel on confine un volume coiffant la charge à saisir, caractérisé en ce qu'il consiste à placer ce volume en communication avec la source d'aspiration et à aspirer continûment de l'air à travers la charge ainsi confinée avec un débit d'écoulement de l'air déterminé de manière à assurer une sustentation de la charge par la dépression créée entre le bas et le haut de la charge en raison de la perte de charge de l'écoulement, ladite perte de charge étant essentiellement localisée et déterminée au niveau de la charge à saisir.

Elle a encore pour objet un dispositif de préhension propre à la saisie d'une charge comportant une pluralité d' objets disposés en lit, du genre mettant en oeuvre une source d'aspiration, une hotte d'aspiration et un moyen latéral de confinement adapté à, au moins en partie coiffer latéralement la charge à saisir, ce moyen se raccordant à un organe formant barrière pour la retenue mécanique de la charge à saisir, caractérisé en ce que l'organe formant barrière pour la retenue mécanique de la charge à saisir est adapté à créer le minimum de perte de charge dans l'écoulement de l'air vers la source d'aspiration.

Ainsi, suivant l'invention, et du fait qu'un moyen latéral de confinement, disposé autour de la charge à saisir, confine le volume dans lequel la dépression due à la source d'aspiration déploie ses effets, la préhension de la charge se fait non pas individuellement, objet par objet, par application de ladite dépression à chacun de ces objets, mais globalement, pour l'ensemble de ces objets, par la perte de charge du fluide s'écoulant autour de ceux-ci, dans la section de passage délimitée par ledit moyen latéral de confinement.

De ce fait, l'efficacité de la préhension à assurer est indépendante de la configuration et/ou de l'orientation relative des objets pouvant composer la charge à saisir, seule intervenant la section de passage laissée libre entre ces objets, et entre ceux-ci et le moyen latéral de confinement qui les entoure.

Des objets de configuration et/ou d'orientation relative quelconque peuvent donc avantageusement être traités.

En outre, si désirè, s'agissant d'objets gerbés en lits superposés avec interposition d'un intercalaire entre deux lits successifs, il est avantageusement possible, suivant l'invention, d'enlever un tel intercalaire conjointement avec les objets qui le surmontent.

Il suffit en effet d'assurer alors par la source d'aspiration mise en oeuvre non seulement l'entraînement des objets d'un tel lit mais encore celui de l'intercalaire sous-jacent à ceux-ci.

Le procédé selon l'invention se caractérisé donc ainsi de manière générale par le fait que le débit d'air aspiré à travers une charge choisie ceinturée par le moyen latéral de confinement est déterminé de manière à assurer une sustentation de la charge par la dépression créée sur la face supérieure de ladite charge en raison de la perte de charge de l'écoulement à travers celle-ci et, le cas échéant, entre cette charge et le moyen latéral de confinement.

Les caractéristiques et avantages de l'invention ressortiront d'ailleurs de la description qui va suivre, à titre d'exemple, en référence aux dessins schématiques annexés sur lesquels:

La figure 1 est, avec un arrachement local, une vue en élévation d'un dispositif de préhension suivant l'invention;

La figure 2 est une vue en élévation-coupe d'un lit d'objets susceptibles d'être saisis par un tel dispositif de préhension;

La figure 3 est une vue en élévation-coupe du dispositif de préhension suivant l'invention illustrant le mode d'intervention de celui-ci;

La figure 4 est une vue en coupe transversale de ce dispositif de préhension, suivant la ligne IV-IV de la figure 3;

La figure 5 est une vue analogue à celle de la figure 3, pour une variante de réalisation;

La figure 6 est, à échelle supérieure, une vue partielle en élévation-coupe d'un dispositif de préhension suivant l'invention, suivant une autre forme de réalisation de celuici.

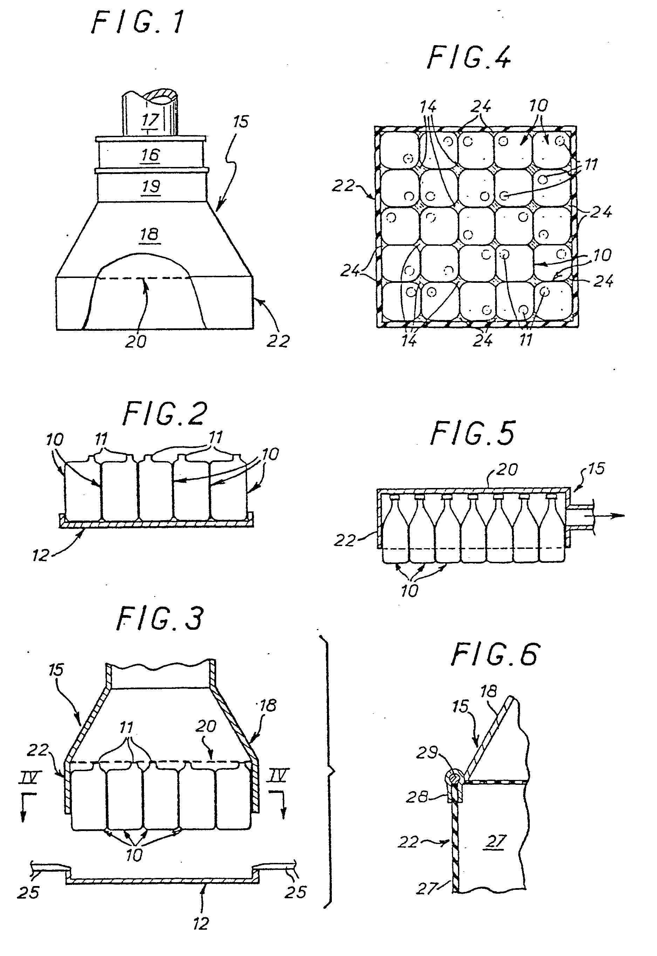

Les figures 1 à 4 illustrent à titre d'exemple l'application de l'invention à la dépalettisation de conteneurs 10, du genre bidons, qui, dans la forme de réalisation, ont une section transversale globalement carrée, à angles largement arrondis, et sont dotés, en partie supérieure, dans l'un des angles d'une telle section, d'un goulot excentré 11.

De tels conteneurs 10 sont gerbés en lits superposés sur une quelconque palette, qui n'est pas représentée sur les figures, mais qui, à titre d'exemple, y est supposée être de contour globalement carré.

Seul un tel lit de conteneurs 10 est représenté à la figure 2, et, à titre d'exemple, il lui est associé, sur celle-ci, un intercalaire 12, en forme de barquette, destine à le séparer du lit sous-jacent. Cet intercalaire blest parfois qu'une simple feuille plane.

Au sein d'un tel lit, les conteneurs 10 sont disposés côte à côte, en étant juxtaposés deux à deux par leurs faces respectives.

Du fait notamment de l'arrondi de leur section, ils ménagent entre eux des passages 14, qui, pour plus de clarté, ont été matérialisés par des hachures à la figure 4.

Du fait de leur excentration, les goulots 11 des conteneurs 10 se trouvent, en plan, pour le lit formé par ces conteneurs 10, disposés de manière aléatoire, suivant l'orientation angulaire relative des conteneurs 10.

11 s'agit, pour la dépalettisation à assurer, de saisir simultanément l'ensemble des conteneurs 10 d'un même lit.

Le dispositif de préhension 15 utilisé à cet effet suivant l'invention met en oeuvre, de manière connue en soi, une source d'aspiration.

11 s'agit, par exemple, d'un ventilateur 16, dont on a schématisé en 17 l'ouie de refoulement.

Ce ventilateur 16 est disposé à la partie haute d'une hotte d'aspiration 16, avec intercalation, entre lui et celle-ci, dans l'exemple de réalisation représenté, d'un dispositif de mise à l'air libre 19 convenablement commande.

Ces dispositions, sont bien connues par elles-mêmes, et ne relevant pas de la présente invention, elles ne seront pas décrites en détail ici.

Leur réalisation relève d'ailleurs simplement du domaine de l'homme de l'art.

De manière également connue en soi, la hotte d'aspiration 18 est, dans la forme de réalisatian représentée sur les figures 1 à 4, fermée, à sa base, par un fond perforé 20, adapté à former une barrière propre à la retenue mécanique des conteneurs à saisir a le'encontre de la source d'aspiration que constitue le ventilateur 16.

Il peut s'agir par exemple d'une tôle convenablement ajourée, d'un grillage, d'un réseau de fils, ou d'un quelconque autre organe formant barrière approprié.

Quoi qu'il en soit, le contour de la base de la hotte d'aspiration 18, et donc de son fond perforé 20, est à l'image de celui du lit de conteneurs 10 à saisir.

Il s'agit donc, dans l'exemple de réalisation représenté, d'un contour globalement carre.

Suivant l'invention, le dispositif de préhension 15 comporte un moyen latéral de confinement ou jupe 22 par laquelle il est adapté à au moins pour partie coiffer latéralement l'ensemble du lit de conteneurs 10 à saisir.

Tel que représenté sur les figures 1 à 4, il peut s'agir par exemple d'un simple prolongement vertical vers le bas, au-delà du fond perforé 20, des parois latérales de la hotte d'aspiration 18, qui forment globalement un tronc de pyramide.

Une telle jupe 22 est donc, dans ce cas, rigide.

Quoi qu'il en soit, elle s'étend, en pratique, à la périphérie de la barrière de retenue mécanique que forme le fond perforé 20 de la hotte d'aspiration 18, et son contour est à l'image de celui de ce fond.

Suivant des dispositions, qui, ne faisant pas partie de la présente invention et ne relevant que du simple domaine de l'homme de l'art, ne seront pas décrites en détail ici, le dispositif de préhension 15 ainsi constitué est globalement monté mobile entre deux positions, l'une de prélèvement, l'autre de déchargement.

pour sa position de prélèvement, il coiffe latéralement l'ensemble du lit de conteneurs 10 à saisir, comme mentionne ci-dessus.

Autrement dit, pour cette position de prélèvement, la jupe 22 de ce dispositif de préhension 15 ceinture l'ensemble du lit de conteneurs 10 à saisir, comme illustré par les figures 3 et 4.

Une telle jupe 22, qui est en continuité avec la hotte d'aspiration 18, confine dès lors latéralement le cheminement de fuite laissé libre au fluide d'aspiration.

A la figure 4, et pour plus de clarté, comme précédemment, on a matérialisé par des hachures les passages 24 ainsi délimités par la jupe 22, entre celle-ci et ceux des conteneurs 10 qui sont à la périphérie du lit formé par l'ensemble de ces conteneurs 10.

Le dispositif de prélèvement 15 étant ainsi en position de prélèvement, on commande l'entrée en action de la source d'aspiration que constitue le ventilateur 16, et, suivant l'invention, on assure par celle-ci un débit d'aspiration suffisant pour établir, de part et d'autre de la section de passage formée par la différence entre, d'une part, la section totale de la jupe 22, et, d'autre part, la partie de celle-ci obturée par les conteneurs 10 concernés, la dépression nécessaire à l'entrainement de ceux-ci.

Ainsi qu'on l'aura compris, cette section de passage est formée par les passages 14 et 24, précisés ci-dessus et matérialisés par des hachures à la figure 4.

Le dispositif de préhension 15 est alors commandé en déplacement, d'abord verticalement, puis, éventuellement, latéralement, jusqu'à sa position de déchargement.

Du fait de la dépression engendrée par le ventilateur 16, les conteneurs 10 se trouvent entrainés, dans leur ensemble, sans qu'il soit nécessaire, comme dans l'art anterieur, qu'une quelconque dépression s'exerce individuellement à l'égard de chacun d'eux.

Cet entraînement est donc notamment indifférent à la localisation de leur goulot 11 vis-à-vis des perforations du fond 20 de la hotte d'aspiration 18.

Comme précisé ci-dessus, ce fond 20 n'a en l'espèce que pour simple but d'assurer une retenue mécanique des conteneurs 10 a l'egard de l'aspiration dont ils sont l'objet.

Si désiré, on assure par le ventilateur 16 constituant la source d'aspiration non seulement l'entraînement des conteneurs 10, comme décrit ci-dessus, mais encore à celui de l'intercalaire 12 sous-jacent à ceux-ci.

Ultérieurement, au cours du déplacement du dispositif de préhension 15, une désolidarisation de cet intercalaire 12 vis-à-vis des conteneurs 10 est assurée par tout moyen approprie.

Par exemple, et tel qu'illustré à la figure 3, il peut s'agir de moyens mécaniques, tels que doigts 25, venant s'interposer sur le trajet suivi alors par l'intercalaire 12, pour la retenue de celui-ci. Son dégagement peut être progressif à partir de sa périphérie, en profitant de sa flexibilité.

Mais il peut s'agir également d'ajutages de soufflages, qui, portés par la hotte d'aspiration 18, sont propres à projeter en direction de l'intercalaire 12 un jet de fluide de nature à assurer la dépose recherchée pour celui-ci, ou, encore, de buses d'aspiration venant s'appliquer sur la face inférieure de cet intercalaire 12.

Quoi qu'il en soit, lorsque le dispositif de préhension 15 est arrivé en position de dégagement, on procède à la suppression de la dépression notamment par au moins une des opérations suivantes: arrêt du ventilateur 16, entrée en action du dispositif de mise à l'air libre 19, ou fermeture de l'ouie de refoulement 17.

Les conteneurs 10 préalablement saisis par ce dispositif de préhension 15 sont alors relâchés par celui-ci.

"Pour saisir les objets, tout en laissant en place le support sur lequel ils sont placés (intercalaire, table, etc...), ce dernier doit être ajouré en conséquence par tout moyen approprié soit par des perforations dans l'intercalaire, soit, dans le cas d'une table, et à titre d'exemple par des planches non jointives, une tôle perforée, etc...".

Le dispositif de préhension selon l'invention admet des fonds perforés 20 nettement plus ajourés que dans l'art antérieur. En effet, selon les procédés anciens tout trou n'aboutissant pas sur l'objet à saisir conduisait à des fuites et se révélait nuisible: on utilisait alors de faibles taux de perforation, toujours inférieurs à 50%. Au contraire selon la présente invention chaque trou participe à l'obtention de la dépression au-dessus des objets à saisir, et affaiblit de plus la perte de charge de part et d'autre de ce fond. Des taux de perforation élevés sont alors recommandés, pouvant avoisiner 100%; le fond peut alors être constitué d'un grillage.

Dans ce qui précède, on a supposé que la source d'aspiration mise en oeuvre exerce ses effets sur les conteneurs 10 à travers un fond perfore.

Il n'en est pas nécessairement ainsi, du fait de la présence suivant l'invention d'une jupe 22.

Au contraire, et tel que schématiquement illustré à la figure 5, le raccordement de l'ouïe d'aspiration du ventilateur constituant la source d'aspiration peut, tel que schematisé par une flèche sur cette figure 5, se faire latéralement par rapport au volume délimité par la jupe 22 suivant l'invention et le fond 20 à la périphérie duquel elle est établie.

Ce fond 20 peut dès lors être plein, sans une quelconque perforation.

Le dispositif de préhension correspondant s'en trouve simplifié, la hotte d'aspiration, notamment, se trouvant éliminée.

Dans l'exemple d'application illustré par la figure 5, les conteneurs à saisir sont des bouteilles, supposées être à section circulaire par exemple.

Dans ce qui précède, il a été supposé que la jupe 22 suivant l'invention était rigide, et qu'elle était rigidement fixée au dispositif de préhension 15 qu'elle équipe.

Il n'en est pas nécessairement ainsi.

Au contraire, si désiré, une telle jupe 22 peut au moins pour partie être mobile entre une configuration de prélèvement pour laquelle elle est apte à se plaquer lateralement contre une partie au moins de ceux des objets à saisir qui sont à la périphérie de l'ensemble formé par ceuxci, et une configuration de déchargement pour laquelle elle est écartée desdits objets.

Par exemple, et tel que schématiquement illustré à la figure 6, l'une au moins des parois 27 d'une telle jupe 22, et, en pratique, chacune de celles-ci, forme un volet articulé par une charnière 28 à un axe de support 29 solidaire de la hotte d'aspiration 18 mise en oeuvre dans l'exemple de réalisation illustré par cette figure 6.

Lorsque la source d'aspiration associée est en action, les parois 27 de la jupe 22 viennent se plaquer d'ellesmême contre les objets à saisir qui se trouvent à la périphérie de l'ensemble formé par ceux-ci.

Lorsque l'action de cette source d'aspiration est interrompue, elles sont libres de s'écarter desdits objets.

Par exemple, il peut leur être associé à chacun un ressort à cet effet (non représenté sur la figure).

En variante, leur dégagement peut être assuré par simple gravité, si, par construction, leur axe de support 29 se trouve déporté latéralement par rapport à la périphérie de l'ensemble formé par les objets à saisir.

Tel que décrit ci-dessus, les parois 27 de la jupe 22 peuvent encore être rigides.

En variante, elles peuvent plus simplement être élastiquement déformables.

Il convient de souligner que l'organe 20 formant barrière pour la retenue mécanique de la charge à saisir joue un rô1e fondamentalement différent des fonds perforés des dispositifs analogues de l'art antérieur. Si dans les deux cas il s'agit d'un arrêt mécanique des objets en direction de la source d'aspiration, dans l'art antérieur les surfaces de passage de l'écoulement d'air doivent être aussi réduites que possible pour éviter des fuites parasites, alors que selon l'invention on cherche au contraire à augmenter ces surfaces de passages, en tendant avantageusement vers 100%, tout en assurant l'arrêt des objets.

## Revendications

1) Procédé de préhension du genre mettant en oeuvre une source d'aspiration pour la saisie d'une charge pouvant comporter une pluralité d'objetsdisposés en lit, selon lequel on confine un volume coiffant la charge à saisir, caractérisé en ce qu'il consiste à placer ce volume en communication avec la source d'aspiration et à aspirer continûment de l'air à travers la charge ainsi confinée avec un débit d'écoulement de l'air déterminé de manière à assurer une sustentation de la charge par la dépression créée entre le bas et le haut de la charge en raison de la perte de charge de l'écoulement, ladite perte de charge étant essentiellement localisée et déterminée au niveau de la charge à saisir.

2) Procédé de préhension suivant la revendication 1, caractérisé en ce que, dans le cas où la charge à saisir comporte des objets disposés en lits superposés avec interposition d'un intercalaire entre deux lits successifs, on assure par la source d'aspiration non seulement l'entraînement des objets d'un même lit mais encore celui de l'intercalaire sous-jacent à ceux-ci.

3) Dispositif de préhension propre à la saisie d'une charge comportant une pluralité d'objets disposés en lit selon le procédé de la revendication 1 ou 2, du genre mettant en oeuvre une source d'aspiration (16), une hotte d'aspiration (18) et un moyen latéral de confinement (22) adapté à, au moins en partie, coiffer latéralement la charge (10) à saisir, ce moyen se raccordant à un organe (20) formant barrière pour la retenue mécanique de la charge à saisir, caractérisé en ce que l'organe (20) formant barrière pour la retenue mécanique de la charge à saisir est adapté à créer le minimum de perte de charge dans l'écoulement de l'air vers la source d'aspiration.

4) Dispositif de préhension suivant la revendication 3, caractérisé en ce que ledit moyen latéral de confinement (22) est rigidement relié à la hotte d'aspiration (18).

**Claims:**

1. A gripping process of the kind using a source of suction, for picking up a load which comprises a plurality of objects arranged in a layer by confining a volume covering the load to be picked up, characterised by placing this volume in communication with the suction source and continuously drawing air through the load which is thus confined with an air flow rate so determined as to ensure that the load is held by the pressure reduction created between the bottom and the top of the load by the pressure drop in the flow, which pressure drop is essentially localised and is determined at the level of the load to be picked up.

2. A gripping process as claimed in Claim 1, characterised in that, when the load to be picked up comprises objects arranged in superposed layers with a spacer interposed between two successive layers, the suction source assures that both one of the layers and its underlying spacer are picked up.

3. A gripping device for picking up a load comprising a plurality of objects arranged in a layer, by the process as claimed in Claim 1 or Claim 2, of the kind employing a suction source (16), a suction hood (18) and a lateral confining means (22) which is adapted, at least in part, for covering the load (10) to be picked up, which means is connected to a device (20) which forms a barrier for mechanically holding-back the load to be picked up, characterised in that the device (20) which forms a barrier for mechanically holding-back the load to be picked up is adapted to create the minimum pressure drop in the air flow towards the suction source.

4. A gripping device as claimed in Claim 3, characterised in that said lateral confining means (22) is rigidly connected to the suction hood (18).

1. Verfahren zum Ergreifen einer Last mittels einer Unterdruckquelle, wobei die Last aus einer Vielzahl von in Lagen angeordneten Gegenständen bestehen kann und wobei man ein Volumen abgrenzt, das die zu ergreifende Last überdeckt, dadurch gekennzeichnet, daß man das Volumen mit der Unterdruckquelle verbindet und kontinuierlich die Luft durch die derart abgegrenzte Last absaugt mit einer Luftströmungsgeschwindigkeit, die derart bestimmt ist, daß ein Auftrieb oder ein Anheben der Last durch den Unterdruck gewährleistet ist, der zwischen der Unterseite und der Oberseite der Last erzeugt wird wegen des Druckverlustes der Strömung, wobei der Druckverlust im wesentlichen im Niveau der zu ergreifenden Last lokalisiert und bestimmt wird.

2. Verfahren zum Ergreifen nach Anspruch 1, dadurch gekennzeichnet, daß in dem Fall, in welchem die zu ergreifende Last Gegenstände aufweist, die in übereinanderliegenden Lagen unter Zwischenschaltung einer Zwischenlage zwischen zwei aufeinanderfolgenden Lagen angeordnet sind, man mit der Unterdruckquelle nicht nur die Mitnahme der Gegenstände aus einer Lage sondern auch die Mitnahme der unter diesen Gegenständen liegenden Zwischenlage gewährleistet.

3. Vorrichtung zum Ergreifen einer Last bestehend aus einer Vielzahl von in Lagen angeordneten Gegenständen zur Durchführung des Verfahrens nach Anspruch 1 oder 2, mit einer Unterdruckquelle (16), einer Saughaube (18) und einer seitlichen Abgrenzungseinrichtung (22), welche wenigstens teilweise seitlich die zu ergreifende Last (10) überdeckt, wobei die Einrichtung sich an ein Organ (20) anschließt, welches eine Anschlagfläche für das mechanische Zurückhalten der zu ergreifenden Last bildet, dadurch gekennzeichnet, daß das Organ (20), das die Anschlagfläche für das mechanische Zurückhalten der zu ergreifenden Last bildet, derart ausgebildet ist, daß es einen minimalen Druckverlust der Luftströmung zu der Unterdruckquelle erzeugt.

4. Vorrichtung zum Ergreifen nach Anspruch 3, dadurch gekennzeichnet, daß die seitliche Abdeckeinrichtung (22) fest mit der Saughaube (18) verbunden ist.

FIG.1

FIG.4

FIG.2

FIG.5

FIG.3

FIG.6